# DEMANDE DE BREVET EUROPEEN

(11) **EP 4 707 653 A1**
(43) Date de publication de la demande: **11.03.2026**
(21) Numéro de dépôt: 25196478.9
(22) Date de dépôt: 18.08.2025
(51) Int. Cl.: F16L 17/02, F16L 21/03, F16L 37/091

(54) **CONNECTEUR RAPIDE**

(30) Priorité: 10.09.2024 FR 2409617
(71) Demandeur: A. RAYMOND ET CIE, 38000 Grenoble (FR)
(72) Inventeur: TRIMPIN, Juergen, 38000 Grenoble (FR); CHEN, Zhen, Zhenjiang, 212009 (CN); LI, Zhongya, Zhenjiang, 212009 (CN)
(74) Mandataire: Santarelli

(57) **Abrégé**

La présente invention concerne Connecteur rapide (100) comprenant :
- un corps de connecteur tubulaire (10) définissant un axe d'insertion et ayant une zone d'étanchéité (20) sous forme d'une rainure annulaire interne pour recevoir un élément mâle ;
- un élément de retenue axial (50);
- la rainure annulaire interne comportant un fond (22) et une paroi latérale (24) qui sont définis par un épaulement interne du corps de connecteur tubulaire principal (10) ;
- l'épaulement interne (25) n'est pas contenu dans un plan transverse, perpendiculaire à l'axe d'insertion ;
- le connecteur (100) comporte, entre l'élément de retenue axial (50) et le fond (22), au moins deux joints d'étanchéité (40, 80) et un espaceur (60) situé entre les joints (40, 80).

## Description

### Domaine de l'invention

La présente invention concerne un connecteur rapide, par exemple pour des tuyaux de transport de fluides.

### État de la technique

Dans l'art antérieur, le brevet EP1766282 décrit un manchon d'étanchéité destiné à un connecteur de distribution de fluide. Ce manchon est prévu avec une forme particulière qui a pour but de diminuer la force requise lors de l'assemblage du connecteur. Toutefois, il existe des cas d'application où un seul manchon d'étanchéité ne suffit pas et où au moins deux joints sont nécessaires pour garantir une étanchéité adéquate. La question se pose alors de savoir comment assembler efficacement au moins deux joints tout en conservant l'avantage d'une force d'assemblage réduite.

### Exposé de l'invention

Pour remédier à l'inconvénient ci-dessus, la présente invention vise à fournir un connecteur rapide qui permet l'assemblage de plusieurs joints d'étanchéité tout en réduisant la force nécessaire à cet assemblage. L'invention propose une configuration de connecteur ayant une zone d'étanchéité ayant un fond 3D pour recevoir les joints, ce qui facilite l'insertion d'un élément mâle et réduit l'effort requis lors de l'assemblage. En outre, l'invention offre la possibilité d'utiliser des joints de différents matériaux ou diamètres, permettant ainsi une adaptation aux diverses exigences des applications en termes de résistance chimique et thermique.

Selon un aspect, la présente invention concerne un connecteur rapide comprenant :
- un corps de connecteur tubulaire définissant un axe d'insertion et ayant une zone d'étanchéité sous forme d'une rainure annulaire interne pour recevoir un élément mâle ;
- un élément de retenue axial ;
- la rainure annulaire interne comportant un fond et une paroi latérale qui sont définis par un épaulement interne du corps de connecteur tubulaire principal ;
   dans lequel, l'épaulement interne n'est pas contenu dans un plan transverse, perpendiculaire à l'axe d'insertion ;
- le connecteur comporte, entre l'élément de retenue axial et le fond, au moins deux joints d'étanchéité et un espaceur situé entre les joints.

Optionnellement, les joints sont, en état assemblage, susceptible avoir un même profil que l'épaulement interne.

Selon un mode de réalisation, l'espaceur est rigide.

Selon un mode de réalisation, l'espaceur est pourvu des moyens de détrompeur.

Selon un mode de réalisation, la rainure annulaire interne comporte une butée interne définissant un étage et une deuxième paroi latérale.

Selon un mode de réalisation, les deux joints sont des joints toriques de diamètres différents.

Selon un mode de réalisation, l'espaceur est souple.

Selon un mode de réalisation, le profil du fond de la rainure annulaire interne n'est pas axisymétrique le long de l'axe d'insertion du connecteur.

Selon un mode de réalisation, l'élément de retenue axial comporte au moins un cran.

Selon un mode de réalisation, le connecteur rapide comporte en outre un élément de verrouillage.

Selon un mode de réalisation, les au moins deux joints sont des joints toriques du même matériel.

Selon un mode de réalisation, les au moins deux joints sont des joints toriques de matériaux différents.

Selon un autre aspect, la présente invention concerne un procédé d'assemblage d'un connecteur rapide de la présente invention ayant un espaceur souple, comportant,
- (i) insertion initiale des deux joints d'étanchéité dans la rainure du corps de connecteur rapide, lesdits joints étant séparés par un espaceur ;
- (ii) mise en place subséquente de l'élément de retenue axial ;
dans lequel, l'espaceur se déforme en fonction du profil de l'épaulement interne pendant l'étape (ii).

Selon un autre aspect, la présente invention concerne un procédé d'assemblage d'un connecteur rapide de la présente invention ayant un espaceur rigide, comportant,
- (i) insertion initiale des deux joints d'étanchéité dans la rainure du corps de connecteur rapide, lesdits joints étant séparés par un espaceur ;
- (ii) mise en place subséquente de l'élément de retenue axial ;
dans lequel, au cours de l'assemblage, l'espaceur conserve sa forme originelle.

Selon un mode de réalisation, l'espaceur est orienté selon une direction prédéfinie avant son insertion dans la rainure dans l'étape (i).

Les avantages de la présente invention sont les suivantes :
L'utilisation de joints d'étanchéité avec une forme en 3D ou en forme de vague permet de compresser progressivement le joint, ce qui nécessite moins de force pour l'assembler dans le connecteur. L'emploi de deux joints d'étanchéité offre une sécurité supplémentaire, car si l'un des joints venait à défaillir, l'autre pourrait toujours assurer l'étanchéité. Les deux joints peuvent être fabriqués à partir de matériaux différents pour résister à différents types de fluides, ce qui rend l'invention adaptée à une variété d'applications où les joints peuvent être en contact avec différents fluides. L'invention permet l'utilisation de matériaux spécifiques pour les j oints toriques qui peuvent résister à des températures extrêmes et à des environnements chimiques agressifs, ce qui est particulièrement utile pour des applications telles que les systèmes de carburant ou de refroidissement.

L'invention permet l'utilisation de joints toriques standards, ce qui est économique et facilite la production en série.

La présence d'un espaceur entre les deux joints permet d'appliquer une pression, comme de l'air comprimé, lors des tests de fuite en production, garantissant ainsi la qualité de l'assemblage et l'intégrité des joints. L'utilisation d'un espaceur rigide empêche la rotation des composants pendant l'assemblage, ce qui améliore la fiabilité.

Les caractéristiques de l'espaceur, telles que les éléments de détrompeur, assurent un assemblage correct et empêchent une mauvaise orientation des composants, ce qui est essentiel pour le bon fonctionnement de l'assemblage.

### Brève description des dessins

L'invention peut être mieux comprise en se référant à la description suivante et aux dessins accompagnants qui illustrent des modes de réalisation de l'invention. Parmi les dessins :
La Figure 1 représente une vue en coupe d'un ensemble de connecteur rapide selon un mode de réalisation de la présente invention;
La Figure 2 illustre une vue en coupe d'un ensemble de connecteur rapide selon un autre mode de réalisation de la présente invention;
La Figure 3 montre une vue en coupe d'un ensemble de connecteur rapide de la Figure 1 sous forme éclatée ;
La Figure 4 présente une vue en coupe d'un ensemble de connecteur rapide de la Figure 1;
La Figure 5 présente une vue en coupe d'un ensemble de connecteur rapide de la Figure 4 avec les éléments d'étanchéité retenus ;
La Figure 6 expose une vue en coupe d'un ensemble de connecteur rapide de la Figure 5 avec un élément de verrouillage;
La Figure 7 illustre une vue en coupe d'un ensemble de connecteur rapide de la Figure 2 ;
La Figure 8 présente une vue en coupe d'un ensemble de connecteur rapide de la Figure 2
La Figure 9 montre une vue en coupe d'un ensemble de connecteur rapide de la Figure 8 avec les éléments d'étanchéité retenus;
La Figure 10 présente une vue en coupe d'un ensemble de connecteur rapide de la Figure 9 avec un élément de verrouillage;
La Figure 11A illustre une vue en perspective de l'espaceur ;
La Figure 11B montre une vue en perspective de l'espaceur ;
La Figure 11C présente une vue en perspective de l'espaceur souple ;
La Figure 12 illustre une vue en perspective du corps de connecteur 10 d'un connecteur 100, montrant la rainure annulaire interne et les moyens détrompeurs.
La Figure 13 présente une vue en coupe d'un connecteur rapide 100 qui reçoit un élément mâle ;
La Figure 14 présente une vue en coupe d'un connecteur rapide 100 qui reçoit un élément mâle, illustrant l'interaction entre l'élément mâle et les éléments étanchéité.

### Description détaillée des modes de réalisation

Les modes de réalisation de la présente invention sont décrits en détail avec les aspects techniques, les caractéristiques structurelles, les objectifs atteints et les effets, en référence aux dessins accompagnants. Plus précisément, les termes utilisés dans les modes de réalisation de la présente invention servent uniquement à décrire le but d'un certain mode de réalisation, mais ne limitent pas la divulgation.

L'expression du singulier dans la présente divulgation inclut le pluriel, sauf si le sens du singulier est clairement différent de celui du pluriel dans le contexte. Dans la description suivante, les termes "comprendre" ou "avoir" peuvent représenter l'existence d'une caractéristique, d'un nombre, d'une étape, d'une opération, d'un composant, d'une partie ou de leur combinaison décrits dans la présente divulgation, et ne peuvent pas exclure l'existence ou l'ajout d'une autre caractéristique, d'un autre nombre, d'une autre étape, d'une autre opération, d'un autre composant, d'une autre partie ou de leur combinaison.

Les termes "premier" ou "deuxième" sont utilisés dans le but d'expliquer divers composants, et les composants ne sont pas limités aux termes "premier" et "deuxième". Les termes "premier" et "deuxième" sont uniquement utilisés pour distinguer un composant d'un autre. Par exemple, un premier composant peut être nommé comme un deuxième composant sans s'écarter de la portée de la présente divulgation.

Les figures accompagnées illustrent un connecteur rapide selon la présente invention. Le connecteur rapide illustré convient à diverses applications, y compris, mais sans s'y limiter, dans le domaine de l'automobile. Plus précisément, le connecteur rapide peut être utilisé dans toutes les circonstances où une première conduite de fluide doit être connectée à une seconde conduite de fluide. Ces circonstances incluent, sans s'y limiter, les avions, les véhicules à moteur et les navires. On peut également citer les usines, les zones commerciales et les zones résidentielles.

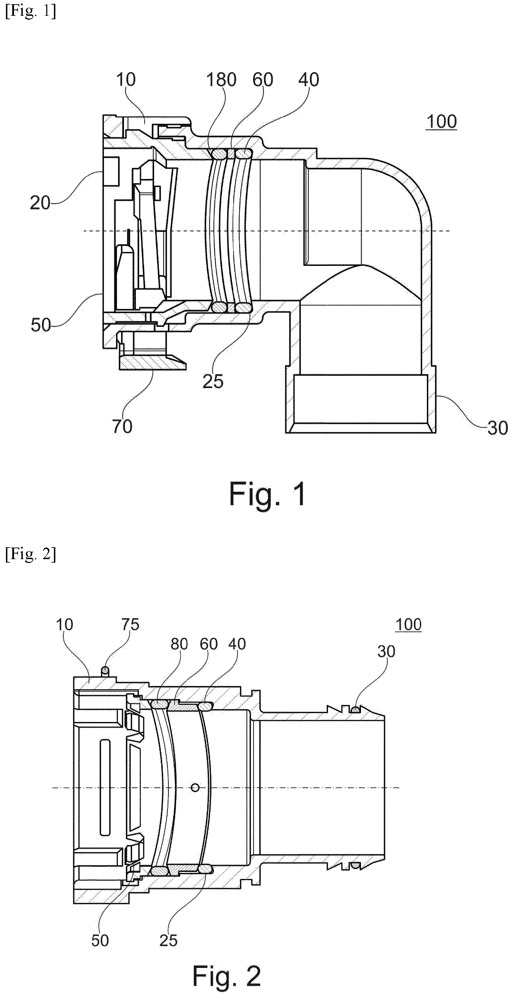

Les Figures 1 et 2 montrent un connecteur rapide 100 selon un mode de réalisation de la présente invention. En référence aux Fig. 1 et 2, le connecteur rapide 100 comprend un corps de connecteur 10 et optionnellement un élément de verrouillage 70, 75 monté sur le corps de connecteur 10. Le corps du connecteur 10 a une première extrémité et une seconde extrémité. La première extrémité peut recevoir un élément enfichable ou un élément mâle (non représenté) et être connectée à l'élément enfichable. L'élément enfichable peut être en communication fluidique avec une première canalisation de fluide. L'élément enfichable peut avoir, par exemple, une forme tubulaire et comporter une bride périphérique sur la périphérie extérieure de l'élément enfichable pour la connexion/le verrouillage avec le connecteur rapide 100. La deuxième extrémité 30 peut être en communication fluidique avec une deuxième canalisation de fluide (telle qu'un tube souple). Ainsi, lorsque le connecteur rapide 100 et l'élément enfichable sont connectés/bloqués l'un à l'autre, la première canalisation de fluide est en communication avec la seconde canalisation de fluide.

La Figure 1 illustre un exemple de réalisation d'un connecteur rapide 100. Le connecteur rapide 100 comprend un corps de connecteur tubulaire 10 définissant un axe d'insertion. À l'intérieur de ce corps de connecteur 10, une rainure annulaire interne est formée, servant de zone d'étanchéité 20, prévue pour accueillir un élément mâle (non représenté). Cette rainure annulaire interne est caractérisée par un fond 22 et une paroi latérale 24, qui sont délimités par un épaulement interne 25 du corps de connecteur 10. Avantageusement, l'épaulement interne 25 est prévu de manière à ne pas être contenu dans un plan transverse perpendiculaire à l'axe d'insertion.

De préférence, le profil du fond de la rainure annulaire interne n'est pas axisymétrique le long de l'axe d'insertion du connecteur.

De préférence, le profil du fond de la rainure annulaire interne présente un profil 3D non plat.

De préférence, le profil du fond de la rainure annulaire interne présente une forme ondulée.

Entre l'élément de retenue axial 50 et le fond 22 de la rainure, le connecteur rapide 100 comprend au moins deux joints d'étanchéité, identifiés comme le premier joint 40 et le second joint 80, avec un espaceur 60 situé entre eux. L'espaceur 60 sert à maintenir un espacement adéquat entre les deux joints d'étanchéité 40, 80 et peut se déformer en fonction du profil de l'épaulement interne pendant l'assemblage.

Dans ce mode de réalisation, l'espaceur est souple.

De préférence, un élément de verrouillage 70 est également présent pour sécuriser l'ensemble du connecteur rapide 100.

Dans un mode de réalisation avantageux, le deux joints 40, 60 sont des joints toriques.

La Figure 2 présente un mode de réalisation d'un connecteur rapide 100 avec un espaceur rigide 60. Le connecteur rapide 100 comprend un corps de connecteur tubulaire 10. À l'intérieur du corps de connecteur 10, deux joints, le premier joint 40 et le second joint 80, sont positionnés et séparés par l'espaceur rigide 60. Cet espaceur 60 maintient un espacement entre les deux joints, ce qui est essentiel pour leur fonctionnement efficace.

Dans un mode de réalisation avantageux, le deux joints 40, 80 sont des joints toriques.

L'espaceur rigide 60 offre l'avantage de stabiliser les joints toriques pendant l'assemblage et les tests de pression, empêchant ainsi leur déplacement ou leur rotation, ce qui pourrait autrement compromettre l'étanchéité du connecteur.

La Figure 2 montre également la forme ondulée du joint torique 80, qui peut permettre une compression progressive du joint lors de l'assemblage, réduisant ainsi la force requise et améliorant l'étanchéité. Ceci sera détaillé plus tard.

Ce mode de réalisation avec l'espaceur rigide 60 est particulièrement avantageux car il offre une sécurité accrue grâce à la double barrière d'étanchéité formée par les deux joints toriques, tout en permettant un test de fuite efficace en appliquant une pression entre les joints lors des tests de production.

La présente invention permet également l'utilisation de composants standard, tels que des joints toriques standard, ce qui est économique et facilite la production en série. En outre, l'espaceur rigide 60 aide à assurer un assemblage correct et empêche une mauvaise orientation des composants.

Optionnellement, deux crans (non illustrés) situés sur la périphérie extérieure de l'élément de retenue 50 sont prévus pour s'emboîter dans des ouvertures présentes sur l'extrémité de raccordement du corps 10, maintenant ainsi l'élément de retenue 50 clipsée dans le corps principal 10. Alternativement, l'élément de retenue axiale peut être une tête du raccord assemblée sur le corps du raccord.

Des ergots détrompeurs permettent d'insérer l'espaceur 60 dans le corps 10 avec une orientation angulaire précise, en glissant dans des rainures situées sur le corps 10. Ceci sera détaillé plus tard.

Par un espaceur souple, on entend un composant prévu pour s'adapter aux variations de profil à l'intérieur du corps de connecteur lors de l'assemblage. Il peut se déformer pour épouser les contours de la rainure annulaire interne et du profil du fond de cette rainure, même si ce profil n'est pas axisymétrique le long de l'axe d'insertion du connecteur. L'espaceur souple peut être fabriqué à partir de matériaux ayant une rigidité faible obtenue par un compromis entre les dimensions et le module de Young du matériau, par exemple des matériaux élastomères ou d'autres matériaux flexibles qui lui permettent de s'ajuster aux irrégularités tout en maintenant une force de compression adéquate sur les joints toriques qu'il sépare.

Par un espaceur rigide, on entend un composant qui maintient un espacement fixe et précis entre les joints toriques au sein de la rainure annulaire interne du corps de connecteur. Contrairement à l'espaceur souple, l'espaceur rigide est fabriqué à partir de matériaux qui présente des épaisseurs plus importantes et utilise des matériaux à module de Young élevé, ce qui lui confère une rigidité élevée, comme les plastiques techniques ou les métaux, qui ne se déforment pas sous la pression de montage ou pendant l'utilisation du connecteur. L'espaceur rigide est prévu pour résister aux forces mécaniques sans altération de sa forme, assurant ainsi un alignement et une séparation constants des joints toriques, même en présence de profils de fond de rainure non axisymétriques.

Dans l'exemple des Figures 1 et 2, l'élément de retenue axial 50 comporte un premier tronçon et un second tronçon dont l'extrémité comprime le deuxième torique 80. Donc la longueur du deuxième tronçon varie en fonction de l'orientation radiale. Avantageusement, le premier tronçon a un diamètre extérieur plus grand que le deuxième tronçon. Cette différence de diamètre expose un bord périphérique du premier tronçon de l'élément de retenue 50, qui peut s'appuyer contre un épaulement de butée du corps principal. Ceci facilite le positionnement de l'élément de retenue axial 50.

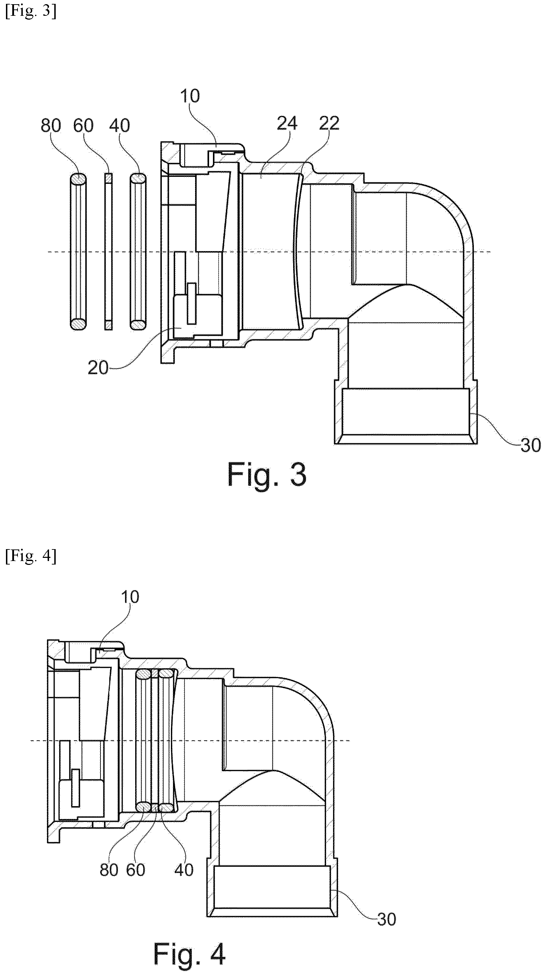

La Figure 3 représente une vue de coupe d'un connecteur rapide, illustrant un mode de réalisation similaire à celui décrit dans la Figure 1, mais présenté sous forme de vue éclatée. Dans cette vue, le premier joint torique 40 et le second joint torique 80 sont séparés par l'espaceur 60. L'espaceur 60 souple est prévu pour maintenir un espacement adéquat entre les deux joints toriques.

La Figure 4 illustre le processus d'introduction des composants 40, 60, 80 d'étanchéité dans le corps de connecteur tubulaire 10. Le premier joint torique 40, l'espaceur 60, et le deuxième joint torique 80 sont placés dans la rainure annulaire interne 20, soit séquentiellement, soit ensemble en tant qu'unité à l'aide d'un outil dédié. Cette étape prépare le connecteur pour l'insertion de l'élément de retenue 50. L'espaceur 60 est souple dans ce mode de réalisation.

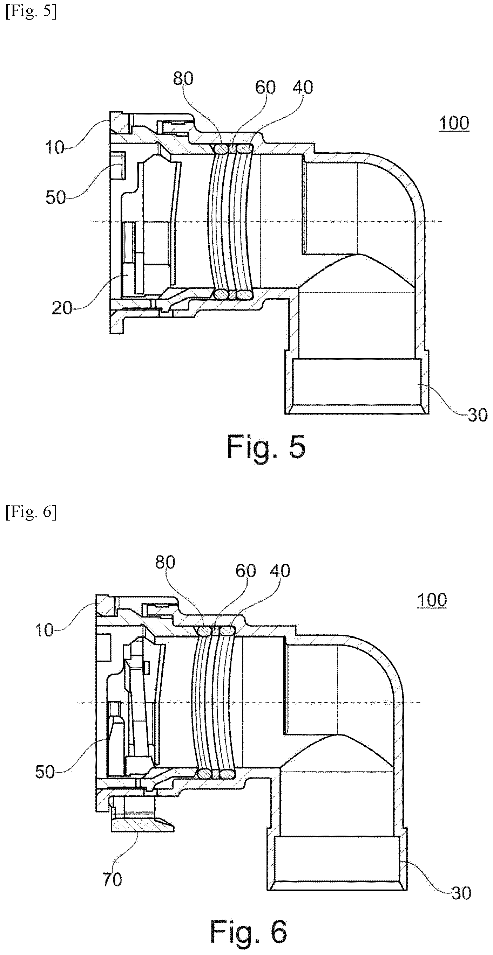

La Figure 5 démontre l'insertion de l'élément de retenue 50 dans le corps de connecteur 10, où il comprime le deuxième joint torique 80 contre le fond de la rainure annulaire interne 20. L'espaceur 60, étant souple, s'adapte au profil de l'épaulement interne pendant cette compression. La Figure 5 illustre de manière avantageuse l'adéquation entre le profil du fond de la rainure annulaire interne 20, et l'extrémité correspondante de l'élément de retenue 50, garantissant ainsi une rétention fiable et une étanchéité performante.

Les composants d'étanchéité, comprenant le premier joint torique 40, l'espaceur 60, et le deuxième joint torique 80, sont insérés dans la rainure annulaire interne 20 du connecteur 100, soit un par un, soit simultanément en tant qu'ensemble, à l'aide d'un outil spécifique, comme démontré dans la Figure 4. Par la suite, l'élément de retenue 50 est positionné, exerçant une pression sur le deuxième joint torique 80. L'espaceur 60, de nature souple, permet aux trois éléments 40, 60, 80 de se comprimer conjointement entre le fond de la rainure annulaire interne 20 et l'élément de retenue 50. Cette configuration est avantageuse, car le profil du fond de la rainure annulaire interne 20 est prévu pour correspondre à celui de l'extrémité de l'élément de retenue 50, assurant ainsi une étanchéité et une fixation adéquates, comme illustré dans la Figure 5.

La Figure 6 représente une vue en coupe d'un connecteur rapide 100, montrant l'ajout d'un élément de verrouillage 70. Cet élément de verrouillage est prévu pour fixer solidement l'élément de retenue 50 en place et/ou pour verrouiller l'élément mâle (non illustré) lorsqu'il est inséré dans le corps de connecteur 10. La Figure 6 illustre la position et la fonction de l'élément de verrouillage 70 au sein de l'assemblage du connecteur rapide 100.

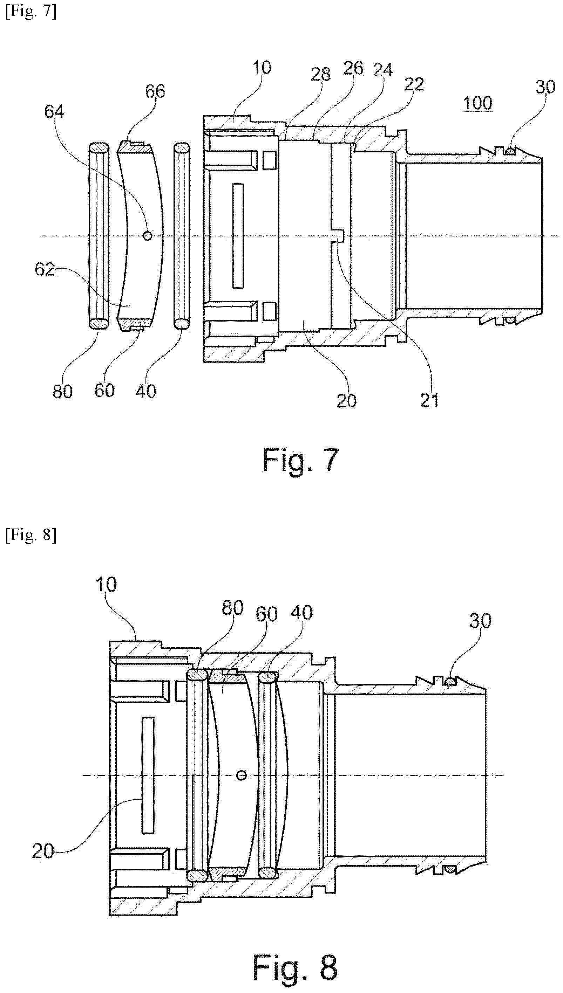

La figure 7 représente une vue de coupe d'un connecteur rapide, illustrant un mode de réalisation similaire à celui décrit dans la Figure 2, mais présenté sous forme de vue éclatée. Les éléments sont disposés de manière à montrer leur agencement relatif avant l'assemblage.

Dans cette vue, le premier joint torique 40 et le second joint torique 80 sont séparés par l'espaceur 60. L'espaceur 60 est prévu pour maintenir un espacement adéquat entre les deux joints toriques, et assure un alignement et une stabilité corrects des joints toriques à l'intérieur du corps de connecteur 10.

La vue explosée permet de comprendre la relation spatiale entre les différents composants du connecteur rapide 100 et la manière dont ils s'assemblent pour former l'ensemble.

Le corps de connecteur loge une rainure annulaire interne, au fond de laquelle se trouve le fond 22. La paroi latérale 24 de la rainure, conjointement avec le fond 22, formant l'épaulement interne 25, délimite l'espace dans lequel le premier joint d'étanchéité sera placé.

La rainure annulaire interne comporte un étage 26, qui, en coopération avec la deuxième paroi latérale 28, fournit un positionnement précis et stable pour l'espaceur 60 et le deuxième joint 80 d'étanchéité. La première extrémité de l'espaceur 62 est prévue pour s'adapter contre le fond 22, assurant ainsi une compression adéquate du premier joint d'étanchéité lors de l'assemblage.

La Figure 8 illustre le processus d'introduction des composants d'étanchéité dans le corps de connecteur tubulaire 10. Le premier joint torique 40, l'espaceur 60, et le deuxième joint torique 80 sont placés dans la rainure annulaire interne 20, soit séquentiellement, soit ensemble en tant qu'unité à l'aide d'un outil dédié par exemple. Cette étape prépare le connecteur pour l'insertion de l'élément de retenue 50. L'espaceur 60 est rigide dans ce mode de réalisation.

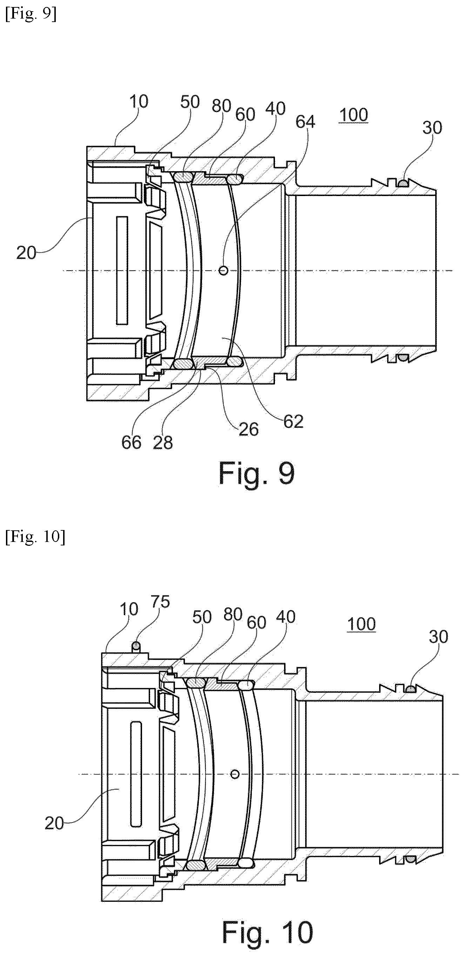

La Figure 9 démontre l'insertion de l'élément de retenue 50 dans le corps de connecteur 10, où il comprime le deuxième joint torique 80 contre le fond de la rainure annulaire interne 20. L'espaceur 60, étant rigide, comprime le premier joint torique 40 contre le fond et le premier joint s'adapte au profil de l'épaulement interne pendant cette compression. La Figure 9 met en évidence la correspondance des profils entre le fond de la rainure annulaire interne 20 et une extrémité de l'élément de retenue 50, assurant ainsi une bonne rétention et une étanchéité efficace.

L'espaceur 60, de nature rigide, permet aux deux éléments 40, 80 de se comprimer conjointement entre le fond de la rainure annulaire interne 20 et l'élément de retenue 50. Cette configuration est avantageuse, car le profil du fond de la rainure annulaire interne 20 est prévu pour correspondre à celui de l'extrémité de l'élément de retenue 50, assurant ainsi une étanchéité et une fixation adéquates, comme illustré dans la Figure 9.

Dans la Figure 9, la rainure annulaire interne 20 du corps de connecteur 10 est caractérisée par un étage défini par une butée 26 et une deuxième paroi latérale 28. Avantageusement, l'étage 26, 28 coopère avec l'espaceur rigide pour son positionnement dans la rainure annulaire 20. L'espaceur rigide 60, lorsqu'il est inséré dans la rainure annulaire 20, s'aligne avec l'étage 26 et la paroi latérale 28, ce qui contribue à la stabilité structurelle de l'ensemble et à la précision de l'alignement des composants d'étanchéité.

Dans ce mode de réalisation, il est avantageux que les deux joints toriques 40, 80 présentent des diamètres différents. Plus précisément, le diamètre du second joint torique 80 est supérieur à celui du premier joint torique 40.

L'espaceur 60, rigide ou souple, comprend les moyens d'orientation 64 sur la surface intérieure, qui peuvent être une forme spécifique ou une structure connue permettant de coopérer avec un outil de montage. Cet outil permet de positionner l'espaceur 60 dans l'orientation voulue à l'intérieur du connecteur.

Pour vérifier l'étanchéité pendant l'assemblage, on peut appliquer une pression contrôlée afin de s'assurer de l'intégrité des joints séparés par l'espaceur. Avantageusement, l'espaceur 60 joue un rôle essentiel dans le processus de vérification de l'étanchéité du connecteur rapide 100 lors de l'assemblage, assurant ainsi que le produit fini répond aux normes de qualité et de performance requises.

La Figure 10 représente une vue en coupe d'un connecteur rapide 100, montrant l'ajout d'un élément de verrouillage tel qu'un clip en cavalier 75, pouvant être métallique, qui peut être inséré dans les rainures prévues afin de maintenir fermement l'élément de retenue 50.

Cet élément de verrouillage 75 est prévu pour fixer solidement l'élément de retenue 50 en place et/ou pour verrouiller l'élément mâle (non illustré) lorsqu'il est inséré dans le corps de connecteur 10.

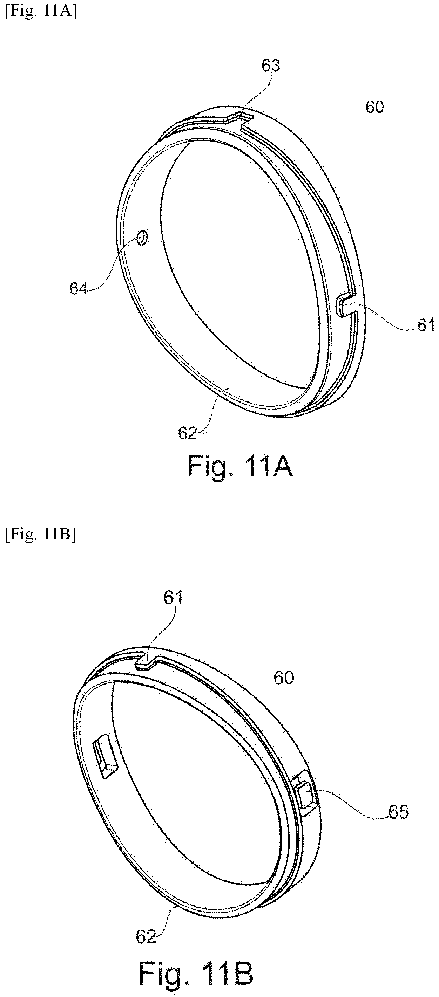

La Figure 11A représente une vue en perspective de l'espaceur 60, illustrant un mode de réalisation de l'espaceur utilisé dans le connecteur rapide. L'espaceur 60 est pourvu de détrompeurs 61, 63, qui facilitent l'orientation correcte de l'espaceur lors de son insertion dans le corps de connecteur 10. La première extrémité de l'espaceur 62, est prévue pour comprimer le premier joint torique 40 pendant l'assemblage, assurant ainsi une étanchéité adéquate entre les composants du connecteur.

La figure 11B représente également une vue en perspective de l'espaceur 60, montrant un autre mode de réalisation. Tout comme dans la figure 11A, cet espaceur 60 est équipé de détrompeurs 61, qui aident à l'alignement précis de l'espaceur lors de l'insertion. La première extrémité 62 de l'espaceur 60 exerce une pression sur le premier joint torique 40 pendant l'assemblage, contribuant à la création d'une barrière d'étanchéité efficace. De plus, l'espaceur 60 dispose de moyens de retenue 65, qui pourraient être des encoches, des crochets ou tout autre mécanisme adapté pour maintenir fermement l'espaceur en position au sein de la rainure annulaire interne 20.

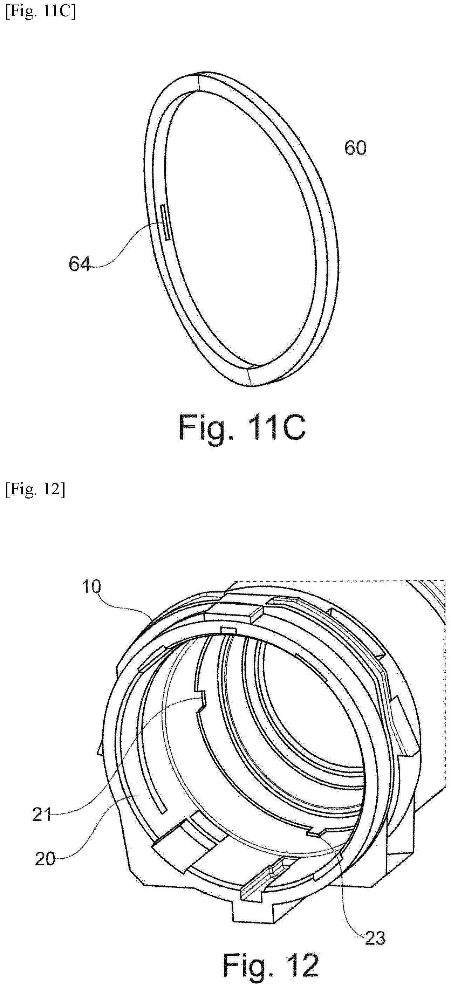

La Figure 11C représente une vue en perspective de l'espaceur rigide 60. L'espaceur rigide 60 est dépourvu de butée. Les moyens d'orientation 64, situés sur la surface interne de l'espaceur 60, permettent de positionner l'espaceur dans l'orientation voulue à l'aide d'un outil pendant l'assemblage.

La Figure 12 illustre une vue en perspective du corps 10 d'un connecteur 100. Le corps de connecteur 10 présente, à l'intérieur de la rainure annulaire interne, les moyens détrompeurs 21, 23 tel que des rainures pour coopérer avec les détrompeurs de l'espaceur 61, 63, non illustrés dans cette figure, lors de l'insertion de l'espaceur dans le corps de connecteur 10. Cette coopération assure un alignement précis et empêche l'insertion incorrecte de l'espaceur, contribuant ainsi à la fiabilité et à la performance de l'assemblage du connecteur. La configuration globale garantit un alignement et une stabilité appropriés des composants au sein de l'ensemble du connecteur.

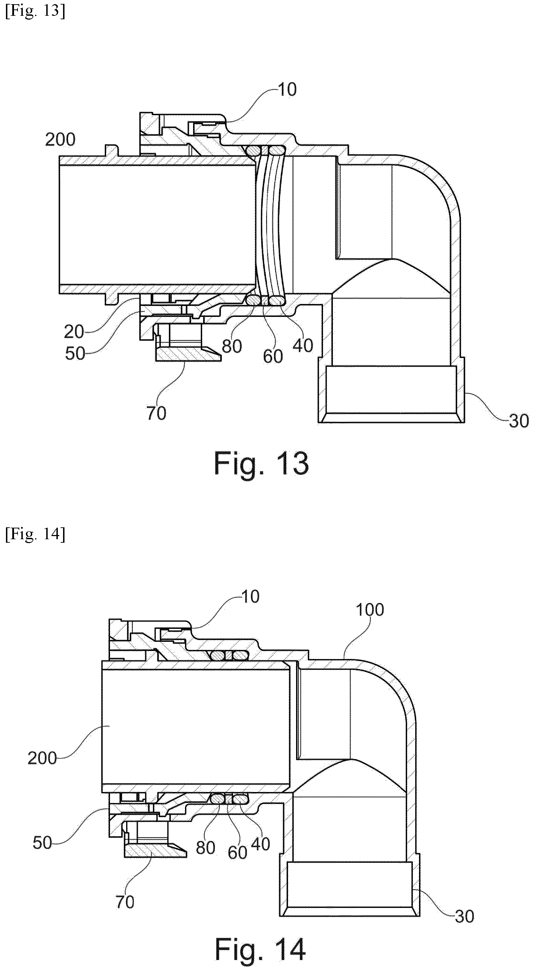

La Figure 13 présente une vue en coupe d'un connecteur rapide 100. Le corps de connecteur 10 loge l'élément de retenue 50, qui assure la fixation de l'ensemble. Le premier joint torique 40 et le deuxième joint torique 80 sont positionnés à l'intérieur du corps de connecteur 10, séparés par l'espaceur 60. Optionnellement, un mécanisme de verrouillage 70 garantit que les composants restent solidement en place à l'intérieur de l'ensemble du connecteur rapide 100.

On introduit un élément mâle 200 dans la rainure annulaire 20.

Ensuite, comme illustré par la Figure 14, l'extrémité pénétrante de l'élément mâle 200 entre en contact initial avec le deuxième joint torique 80 sur une partie de sa périphérie. À mesure que l'élément mâle 200 s'insère davantage dans le corps de connecteur 10, la surface de contact avec le deuxième joint torique 80 augmente, provoquant une compression progressive du joint. Cette compression graduelle réduit l'effort nécessaire pour insérer complètement l'élément mâle 200, comparativement à une situation où le joint serait comprimé de manière uniforme sur toute sa périphérie dès le début de l'insertion. Le fond de la rainure annulaire peut être associé à la forme ondulée du joint 80, présente une forme en vague qui varie en sinusoïde, permettant cette compression progressive.

Avantageusement, l'emploi de deux joints d'étanchéité offre une sécurité supplémentaire, car si l'un des joints venait à défaillir, l'autre pourrait toujours assurer l'étanchéité.

Avantageusement, les joints toriques sont de même matériel.

Ceci offre une connexion fiable et redondant afin assurer l'étanchéité.

Avantageusement, les joints toriques sont de matériaux différents.

Ceci permet de garantir une Compatibilité thermique et chimique. En effet, : L'invention permet l'utilisation de matériaux spécifiques pour les joints toriques qui peuvent résister à des températures extrêmes et à des environnements chimiques agressifs, ce qui est particulièrement utile pour des applications telles que les systèmes de carburant ou de refroidissement.

### LISTE DE SIGNES DE RÉFÉRENCE

| **Signe de référence** | **Désignation** |
|---|---|
| 100 | Connecteur |
| 10 | Corps de connecteur tubulaire |
| 20 | Rainure annulaire interne / Zone d'étanchéité |
| 21 | Rainure / Moyen détrompeur |
| 22 | Fond |
| | Rainure / Moyen détrompeur |
| 24 | Paroi latérale |
| 26 | Étage |
| 25 | Épaulement interne |
| 28 | Deuxième paroi latérale |
| 30 | Extrémité de connecteur |
| 40 | Premier joint |
| 50 | Élément de retenue axial |
| 60 | Espaceur |
| 61 | Moyen détrompeur |
| 62 | Première extrémité de l'espaceur |
| 63 | Moyen détrompeur |
| 64 | Forme d'orientation |
| 65 | Moyen de retenue |
| 66 | Section réduite de l'espaceur |
| 70 | Élément de verrouillage |
| 75 | Élément de verrouillage |
| 80 | Deuxième joint |

## Revendications

1. Connecteur rapide (100) comprenant :
- un corps de connecteur tubulaire (10) définissant un axe d'insertion et ayant une zone d'étanchéité (20) sous forme d'une rainure annulaire interne pour recevoir un élément mâle ;
- un élément de retenue axial (50);
- la rainure annulaire interne comportant un fond (22) et une paroi latérale (24) qui sont définis par un épaulement interne du corps de connecteur tubulaire principal (10) ;
**caractérisé en ce que**
- l'épaulement interne (25) n'est pas contenu dans un plan transverse, perpendiculaire à l'axe d'insertion ;
- le connecteur (100) comporte, entre l'élément de retenue axial (50) et le fond (22), au moins deux joints d'étanchéité (40, 80) et un espaceur (60) souple ou rigide situé entre les joints (40, 80) qui sont susceptibles avoir un même profil que l'épaulement interne (25).

2. Connecteur rapide (100) selon la revendication 1, dans lequel, l'espaceur rigide est pourvu des moyens de détrompeur (61, 63).

3. Connecteur rapide (100) selon l'une quelconque des revendications 1 à 2, dans lequel, la rainure annulaire interne comporte une butée interne définissant un étage (26) et une deuxième paroi latérale (28).

4. Connecteur rapide (100) selon l'une quelconque des revendications 1 à 3, dans lequel, les deux joints sont des joints toriques de diamètres différents.

5. Connecteur rapide (100) selon l'une quelconque des revendications précédentes, dans lequel, le profil du fond de la rainure annulaire interne n'est pas axisymétrique le long de l'axe d'insertion du connecteur.

6. Connecteur rapide (100) selon l'une quelconque des revendications précédentes, dans lequel, l'élément de retenue axial comporte au moins un cran.

7. Connecteur rapide (100) selon l'une quelconque des revendications précédentes, comportant en outre un élément de verrouillage (70, 75).

8. Connecteur rapide (100) selon l'une quelconque des revendications 1 à 7, dans lequel, les au moins deux joints (40, 80) sont des joints toriques du même matériel.

9. Connecteur rapide (100) selon l'une quelconque des revendications 1 à 7, dans lequel, les au moins deux joints (40, 80) sont des joints toriques de matériaux différents.

10. Procédé d'assemblage d'un connecteur rapide (100) selon l'une quelconque des revendications 1 et 5 à 9, comportant,
- (i) insertion initiale des deux joints d'étanchéité dans la rainure du corps de connecteur rapide, lesdits joints étant séparés par un espaceur ;
- (ii) mise en place subséquente de l'élément de retenue axial ;
dans lequel, l'espaceur se déforme en fonction du profil de l'épaulement interne pendant l'étape (ii).

11. Procédé d'assemblage d'un connecteur rapide (100) selon l'une quelconque des revendications 1 à 9, comportant,
- (i) insertion initiale des deux joints d'étanchéité dans la rainure du corps de connecteur rapide, lesdits joints étant séparés par un espaceur ;
- (ii) mise en place subséquente de l'élément de retenue axial ;
dans lequel, au cours de l'assemblage, l'espaceur conserve sa forme originelle.

12. Procédé d'assemblage d'un connecteur rapide (100) selon la revendication 11, dans lequel, l'espaceur est orienté selon une direction prédéfinie avant son insertion dans la rainure dans l'étape (i).
